# FASCICULE DE BREVET EUROPEEN

(11) **EP 0 530 313 B1**
(45) Date de publication et mention de la délivrance du brevet: **04.03.1998**
(21) Numéro de dépôt: 91911474.4
(22) Date de dépôt: 21.05.1991
(51) Int. Cl.: G03H 1/22, G09F 19/12

(54) **DISPOSITIF POUR AMELIORER LE CONTRASTE OPTIQUE D'UNE IMAGE HOLOGRAPHIQUE**
VORRICHTUNG ZUM VERBESSERN DES OPTISCHEN KONTRASTES EINES HOLOGRAPHISCHEN BILDES
DEVICE FOR IMPROVING THE OPTICAL CONTRAST OF A HOLOGRAPHIC IMAGE

(30) Priorité: 21.05.1990 FR 9006295
(43) Date de publication de la demande: 10.03.1993
(73) Titulaire: GARCON, Thierry, F-95600 Eaubonne (FR)
(72) Inventeur: GARCON, Thierry, F-95600 Eaubonne (FR)
(74) Mandataire: Casalonga, Axel
(86) Numéro de dépôt international: FR9100410
(87) Numéro de publication internationale: WO9118330

(56) Documents cités:
- WO-A-89/12851
- DE-A- 3 735 983
- FR-A- 2 383 431
- FR-E- 40 409
- GB-A- 419 569
- Patent Abstracts of Japan, volume 14, no. 426 (P-1105)[4369] 13 septembre 1990, & JP, A, 2165400
- Patent Abstracts of Japan, volume 5, no. 77 (P-62)[749] 21 mai 1981, & JP, A, 56024312
- H.J. Caulfield: "Handbook of optical holography", Academic Press, 1979, (New York, US), pages 133,134, voir page 134, lignes 14,15

## Description

La présente invention a pour objet un dispositif pour améliorer le constraste optique d'images holographiques qui doivent être présentées en pleine lumière, par exemple sur du mobilier urbain.

Les hologrammes, qu'ils soient plans ou courbes, tels que ceux décrits par le déposant dans le brevet FR-A-2.633.069 du 20.06.1988, présentent l'inconvénient de ne pas pouvoir être convenablement observés quand ils sont exposés à un éclairement extérieur dont l'intensité lumineuse est importante.

En effet, un hologramme présente, dans une direction d'une zone dans laquelle doit se trouver un observateur, non seulement une image holographique mais aussi un reflet formé, sur sa surface spéculaire, par la réflexion de la lumière ambiante.

Par conséquent, dès que la lumière ambiante est intense, il est difficile à l'observateur de faire la distinction entre l'image holographique et le reflet, de sorte que l'observation de l'hologramme est désagréable, pénible et fatiguante quand elle n'est pas tout simplement impossible.

Pour remédier à ces inconvénients, on a pensé à diminuer l'intensité de la lumière ambiante en présentant des hologrammes dans des salles obscures ou dans des locaux dont l'intensité de la lumière est volontairement réduite

Ainsi, le contraste de l'image holographique augmente puisque le reflet est amoindri jusqu'à devenir imperceptible.

Mais cette solution est beaucoup trop contraignante car les hologrammes sont enfermés, ce qui réduit considérablement les possibilités d'utilisation de l'holographie comme vecteur de présentation d'informations à un public nombreux.

On a aussi pensé à réaliser des hologrammes dont la surface spéculaire est recouverte de couches minces antiréflechissantes.

Il en résulte que le pouvoir réflecteur de cette surface est abaissé et que le contraste optique de l'image holographique est augmenté lorsqu'elle est présentée dans un lieu éclairé par une lumière ambiante intense, notamment à l'extérieur par jour ensoleillé.

Toutefois, cette solution est beaucoup trop onéreuse pour les hologrammes de grand format, en raison du coût élevé de la couche mince, alors que, précisément, ce sont les hologrammes de grand format qui sont adaptés à leur présentation dans des lieux publics très fréquentés.

Une autre solution consiste- à disposer un polariseur circulaire, traité "anti-reflets", devant chaque hologramme, afin d'atténuer le reflet de la lumière ambiante.

Cette solution présente l'inconvénient de nécessiter une image holographique plus lumineuse car la densité du polariseur est importante et absorbe beaucoup de lumière. De plus, le polariseur est cher et rend la solution trop coûteuse.

On connait également par le document DE-A-3 735 983 un hologramme courbe dont toutes les génératrices droites sont parallèles au plan d'observation de l'observateur qui est astreint à demeurer fixe sur ce dernier.

Le dispositif de ce document DE-A-3 735 983 n'est pas adapté à l'observation d'images holographiques, notamment dans une ambiance lumineuse externe, par plusieurs personnes pouvant se déplacer.

En d'autres termes, ce dispositif antérieur ne permet pas d'éviter que les objets sombres empêchent une bonne visibilité de l'image holographique de près comme de loin, quelle que soit l'incidence d'observation, pour des observateurs de tailles différentes ayant la direction de leur regard parallèle au plan d'observation.

L'invention propose une solution nouvelle, tout-à-fait différente des enseignements de la technique connue.

Elle permet d'augmenter le contraste des images holographiques présentées en pleine lumière, sans utiliser de filtre polarisant, sans traitement antiréfléchissant et, par conséquent, sans altérer d'aucune manière la qualité et la luminosité des images.

Pour cela, l'invention prévoit de substituer au reflet lumineux parasite, un reflet d'un objet sombre qui est moins lumineux que les parties lumineuses de l'image holographique.

Il peut s'agir d'un objet recevant de la lumière mais qui l'absorbe au moins en partie, par exemple un objet noir.

Il peut s'agir aussi d'un objet susceptible de refléchir de la lumière mais qui est situé à un endroit tel et selon une orientation telle qu'il reçoit peu de lumière.

L'important est donc qu'il existe, pour les observateurs, un net différentiel de lumière entre les rayons provenant de l'objet réfléchis par l'hologramme et les rayons issus de l'image holographique.

Ainsi, il n'est plus nécessaire de présenter les hologrammes dans une salle obscure car on reconstitue, en quelque sorte, l'ambiance sombre en la limitant strictement à la zone d'observation, ou plus exactement à la surface de l'hologramme observé.

Telle que revendiquée, l'invention a pour objet un dispositif pour l'observation, par un ou plusieurs observateurs susceptibles de se déplacer sur un plan d'observation prédéterminé dans une zone d'observation prédéterminée, d'au moins une image holographique exposée dans une ambiance lumineuse, comprenant:
- un hologramme présentant au moins une surface spéculaire concave tournée vers la zone d'observation, dont la normale en chaque point ainsi qu'une génératrice droite de cette surface spéculaire passant par ce point, sont sécantes avec le plan d'observation selon des angles respectifs non droits,
- une source lumineuse éclairant l'hologramme selon un faisceau de restitution pour restituer, après diffraction par l'hologramme, l'image holographique dans la zone d'observation selon au moins un faisceau diffracté d'observation sensiblement parallèle au plan d'observation, et,
- au moins un objet sombre, situé en dehors des trajets optiques respectifs dudit faisceau de restitution et du ou des faisceaux diffractés d'observation, et agencé de façon à ce que sa surface se reflète sur la surface spéculaire de l'hologramme selon un ou des faisceaux réfléchis sensiblement confondus avec le ou les faisceaux diffractés d'observation.

Selon des modes de réalisation de l'invention, l'hologramme peut présenter une surface spéculaire comportant au moins une partie cylindrique ou au moins une partie tronconique. Les normales à la surface spéculaire de l'hologramme peuvent couper le plan d'observation du côté de la partie concave de l'hologramme ou peuvent couper le prolongement du plan d'observation situé du côté de la partie convexe de l'hologramme.

Le ou les faisceaux réfléchis atteignant les yeux du ou des observateurs peuvent résulter d'une simple et/ou d'une double réflexion de l'objet sombre sur la surface spéculaire de l'hologramme.

Le dispositif peut comporter en outre des surfaces réfléchissantes auxiliaires par l'intermédiaire desquelles l'objet sombre se réflète sur la surface spéculaire de l'hologramme.

Un objet sombre peut se situer au niveau du plan d'observation. Au moins un objet sombre peut se situer au-dessus de l'hologramme. Au moins un objet sombre peut entourer la source de restitution.

Un même support peut soutenir l'hologramme et l'objet sombre. Ce support commun à l'hologramme et à l'objet sombre peut être constitué par une colonne cylindrique qui présente au moins une fenêtre de visualisation des images holographiques.

Le dispositif peut comporter des moyens destinés à réguler l'éclairement de l'hologramme en fonction de la luminosité du site dans lequel il se trouve placé.

La source de restitution de l'hologramme peut être constituée par une source de lumière d'un appareil d'éclairage contribuant à créer l'ambiance lumineuse.

L'invention sera mieux comprise par la description détaillée ci-après faite en référence au dessin annexé. Bien entendu, la description et le dessin ne sont donnés qu'à titre d'exemple indicatif et non limitatif.

La figure 1 représente schématiquement, en plan, un hologramme de type transparent sur fond noir et illustre l'intérêt d'utiliser un hologramme concave.

La figure 2 représente schématiquement en coupe, un hologramme et un objet sombre combinés selon la présente invention.

La figure 3 est une vue schématique en perspective d'un mode de réalisation de l'invention, en l'absence de la source de restitution.

La figure 4 est une vue schématique en perspective d'un autre mode de réalisation de l'invention, en l'absence de la source de restitution.

La figure 5 est une vue schématique en perspective d'un dispositif conforme à l'invention, selon lequel l'hologramme est tronconique à grande base inférieure et selon lequel l'objet sombre est situé sur le plan d'observation.

La figure 6 est une vue schématique en perspective d'un dispositif conforme à l'invention, selon lequel l'hologramme est tronconique à grande base supérieure et selon lequel l'objet sombre est situé au-dessus du plan d'observation et au-dessus de l'image holographique.

La figure 7 est une vue schématique partielle illustrant l'application de l'invention à une colonne destinée à l'affichage.

La figure 8 est une schéma montrant deux réflexions successives sur la surface spéculaire de l'hologramme, de la lumière provenant de l'objet sombre.

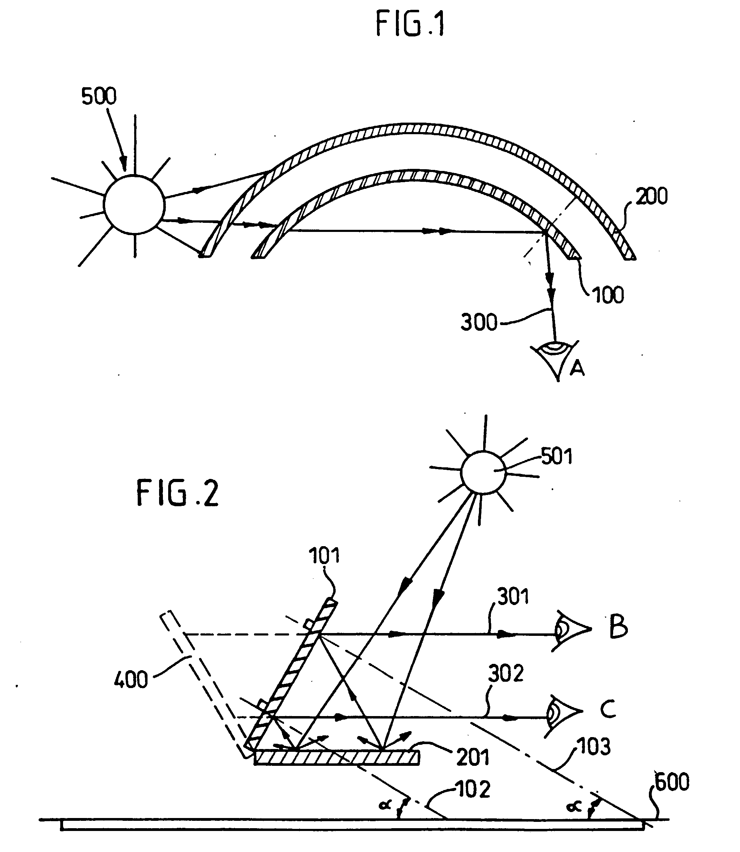

En se reportant à la figure 1, on voit qu'il est avantageux d'utiliser un hologramme de forme concave au lieu d'un hologramme plan ou de forme convexe :

Un fond noir 200 est habituellement utilisé pour les hologrammes transparents afin d'augmenter, par transmission, le contraste des images holographiques.

Grâce à la concavité de l'hologramme, un observateur A peut voir le reflet du fond noir 200 par le rayon lumineux 300 qui traverse l'hologramme transparent 100 avant de se réfléchir sur la surface spéculaire de l'hologramme 100.

Si la lumière ambiante provient de la source 500 et est absorbée par le fond noir 200 avant de pouvoir traverser l'hologramme 100 pour atteindre sa surface spéculaire, l'observateur A peut donc constater une amélioration du contraste, cette fois-ci par réflexion sur la surface spéculaire de l'hologramme, en voyant le reflet du fond noir 200 dans l'alignement d'une image holographique.

Ainsi, la forme concave de l'hologramme permet, par rapport aux hologrammes plans ou de forme convexe, de réduire les dimensions d'un objet sombre que l'on dispose, selon l'invention, de telle manière que la lumière provenant de cet objet arrive directement sur la surface spéculaire de l'hologramme sans avoir à la traverser, ceci afin d'obtenir un meilleur contraste sur les images holographiques, quelle que soit la direction de la lumière ambiante.

La surface concave de l'hologramme est généralement cylindrique ou conique et, si les techniques d'enregistrement holographique le permettent, elle peut aussi être sphérique.

Sur la figure 2, on voit le positionnement des différents éléments selon l'invention.

Une tranche, ou section, de l'hologramme concave 101 est inclinée suivant un angle a entre au moins une normale 102 ou 103 à sa surface spéculaire et un plan 600 dit "plan d'observation", plus généralement horizontal ou légèrement incliné, sur lequel on trouvent les observateurs B et C.

Il peut s'agir du sol d'un local, d'un trottoir de rue ou de toute autre surface pouvant recevoir des observateurs.

Un objet 201 qui absorbe en grande quantité la lumière provenant d'une source lumineuse 501 est positionné de telle manière que les observateurs B et C, de tailles différentes, puissent voir son reflet 400 de près comme de loin sur la surface spéculaire de l'hologramme concave 101.

Ce reflet 400 est donc visible grâce aux rayons lumineux 301 et 302 qui se propagent parallèlement au plan 600 après s'être réfléchis sur la surface spéculaire de l'hologramme concave 101.

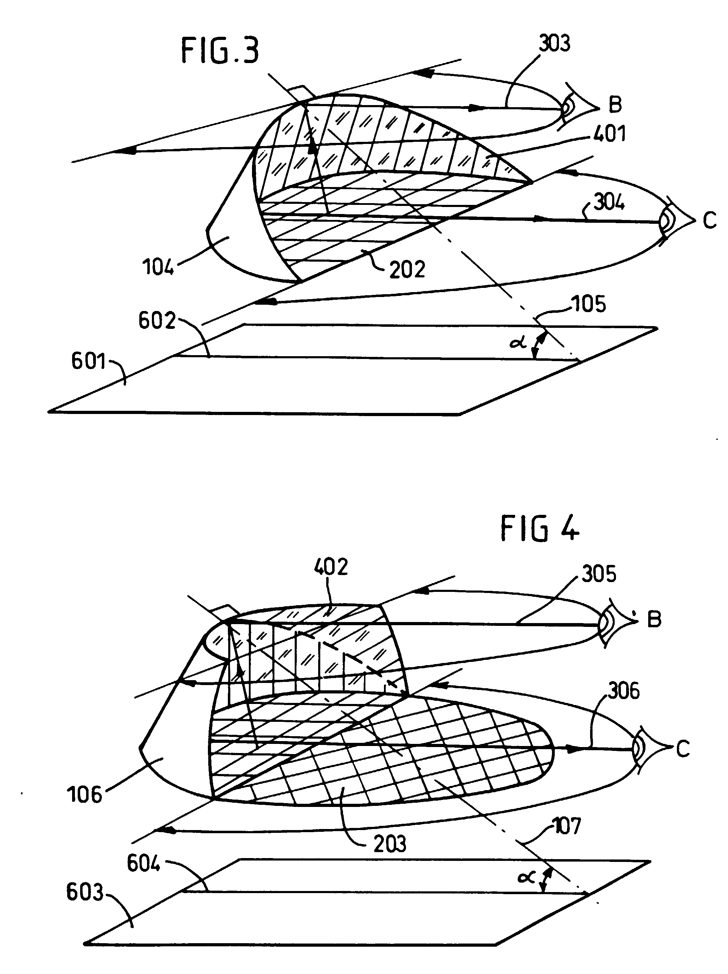

Sur la figure 3, on peut constater qu'à une certaine forme de l'objet sombre 202, correspond une forme de l'hologramme concave 104, ici cylindrique, qui permet de montrer constamment aux observateurs B et C, de tailles différentes, lorsqu'ils se déplacent sur le plan d'observation 601, le reflet 401 de l'objet 202 sur sa surface spéculaire.

Le reflet 401 est similaire à une image d'un objet donné par un miroir déformant.

Ainsi, le reflet 401 de l'objet 202, visible pour les observateurs B et C dans une direction parallèle au plan 601 par les rayons lumineux 303 et 304, est par endroits déformé par la forme géométrique concave de la surface spéculaire de l'hologramme 104.

Ici, cet ensemble formé par l'hologramme 104 et l'objet 202 permet aux observateurs B et C, de tailles différentes, de pouvoir aisément tourner autour de l'hologramme 104, en conservant la direction de leur regard parallèle au plan 601, sans être à aucun moment gênés par l'objet 202 pour visualiser son reflet 401 sur toute la surface de l'hologramme 104.

Ce résultat provient de la forme concave de l'hologramme et de son inclinaison, car il présente au moins une normale 105 à sa surface spéculaire concave qui forme un angle α, non droit, avec une droite 602 du plan 601, mais aussi de ses dimensions et de sa position par rapport à l'objet 202 et, enfin, des dimensions de cet objet 202.

La forme du bord supérieur de l'hologramme 104 a été obtenue selon la forme de la partie supérieure du reflet 401 correspondant au bord rectiligne de l'objet 202.

Sur la figure 4, l'objet sombre 203 est toujours en matière absorbant la lumière et présente une surface supérieure à celle de l'objet 202 de la figure 3.

Cela permet d'agrandir la surface de l'hologramme d'une certaine valeur qui permet aux observateurs B et C, de tailles différentes, de visualiser sur chacune des parties de la surface spéculaire concave de l'hologramme 106, lorsqu'ils tournent autour en conservant la direction de leur regard parallèle au plan 603, le reflet 402 de l'objet 203 par endroit déformé et grossi.

On peut dire que le reflet 402 des bords de l'objet 203 délimite la surface de l'hologramme 106.

Ainsi, l'objet 203 est positionné de telle manière que la surface spéculaire concave de l'hologramme 106, dont une normale 107 forme un angle α, non droit, avec une droite 604 du plan 603, puisse donner par réflexion au moins deux rayons lumineux 305 et 306, provenant de l'objet 203 qui se propagent parallèlement au plan 603 pour permettre aux observateurs B et C de voir le reflet 402 de l'objet 203 de près comme de loin.

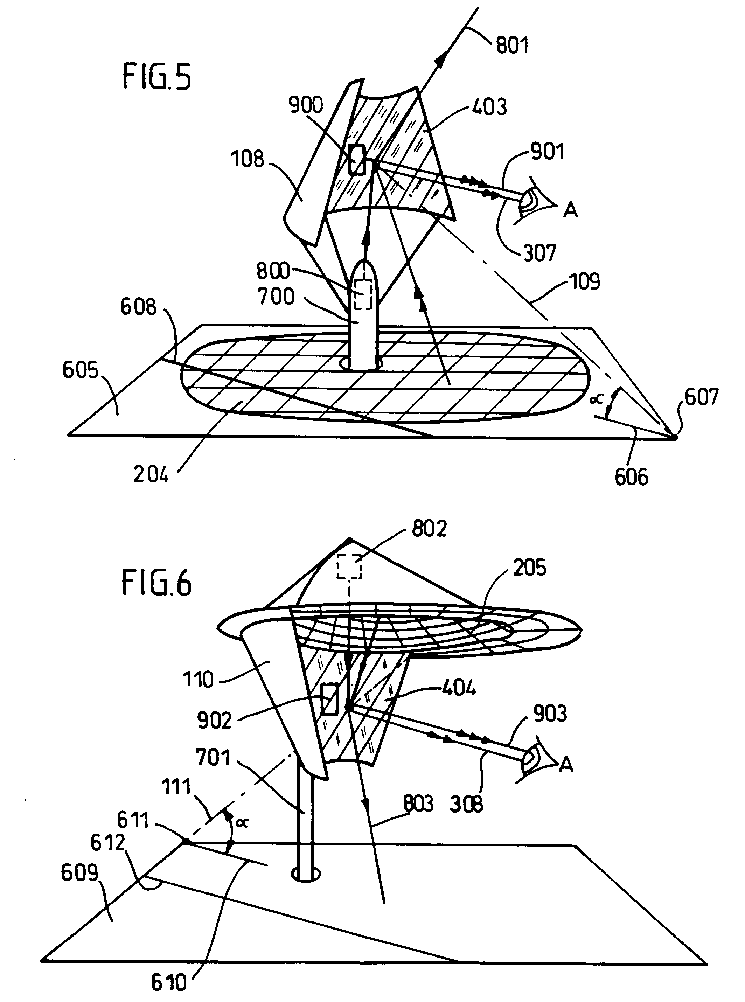

La figure 5 représente un exemple de présentation d'une image holographique 900 selon l'invention.

Un rayon 901 provenant d'une image holographique 900 se propage parallèlement à une droite 608 du plan 605 sur lequel se déplace un observateur A pour qu'il puisse la visualiser de près comme de loin, dans l'alignement du reflet 403 sur la surface spéculaire concave de l'hologramme 108 de l'objet sombre 204.

Lorsqu'il est positionné en pleine lumière, l'objet 204 doit être suffisamment sombre pour que son reflet 403 sur la surface spéculaire concave de l'hologramme 108 visible par le rayon lumineux 307, paraisse moins lumineux, pour l'observateur A qu'une partie lumineuse de l'image holographique 900.

Une normale 109 à la surface spéculaire concave de l'hologramme 108 forme toujours un angle a non droit, avec une droite 606 du plan 605, afin de ne pas être confondue et parallèle à un rayon lumineux provenant d'une partie de l'image holographique 900 qui se propagerait parallèlement à la droite 608 du plan 605, auquel cas l'objet 204 devrait se trouver dans la direction de propagation de ce rayon lumineux, pour que son reflet soit visible dans l'alignement de cette partie de l'image holographique 900.

Le rayon lumineux 801 réfléchi par la surface spéculaire concave de l'hologramme 108 et provenant de la source de restitution 800 de l'hologramme, ne se propage pas dans la direction du rayon lumineux 901 de la partie de l'image holographique 900, afin de ne pas gêner sa visualisation.

Ici, le point d'intersection 607, entre une normale 109 à la surface spéculaire concave de l'hologramme 108 et le plan d'observation 605 est situé dans la zone de l'espace dans laquelle doit se trouver l'observateur A pour visualiser l'image holographique 900.

L'hologramme 108 et l'objet 204 sont ici plus éloignés l'un de l'autre, ce qui implique une augmentation de la surface de l'objet 204 pour que son reflet 403 soit aussi visible que précédemment.

L'hologramme 108 est maintenu par un support 700 qui ne soutient pas en même temps l'objet 204, puisque celui-ci est placé sur le plan d'observation 605.

L'hologramme 108 a une concavité conique pour avoir toutes les normales à sa surface spéculaire inclinées du même angle α.

La figure 6 représente un autre exemple de présentaion d'une image holographique 902 selon l'invention.

Ici, le point d'intersection 611 entre une normale 111 à la surface spéculaire concave conique de l'hologramme 110 et le plan d'observation 609 est situé en dehors de la zone de l'espace dans laquelle doit se trouver l'observateur A pour visualiser l'image holographique 902.

Une partie de l'image holographique 902 est toujours visible pour l'observateur A grâce au rayon lumineux 903 qui se propage parallèlement à une droite 612 du plan 609.

Le reflet 404 de l'objet sombre 205 est toujours visible pour l'observateur A, de près comme de loin, grâce au rayon lumineux 308 qui se propage parallèlement à la droite 612 du plan 609.

L'hologramme 110 a toujours au moins une normale 111 à sa surface spéculaire concave qui forme un angle α, non droit, avec une droite 610 du plan 609.

Le rayon lumineux 803 réfléchi par la surface spéculaire concave de l'hologramme 110 et provenant de la source de restitution 802 de l'hologramme, ne se propage pas dans la même direction que le rayon lumineux 903 de la partie de l'image holographique 902 qui doit être vue, de près comme de loin, par l'observateur A, dans l'alignement du reflet 404.

On peut aussi constater par cet exemple que l'hologramme 110 et l'objet 205 sont maintenus par un même support 701.

Le rayon provenant de l'objet sombre pour former le reflet qui doit être visible dans l'alignement d'au moins une partie de l'image holographique, peut arriver soit directement sur la surface spéculaire concave de l'hologramme, soit indirectement par au moins une réflexion sur un miroir approprié.

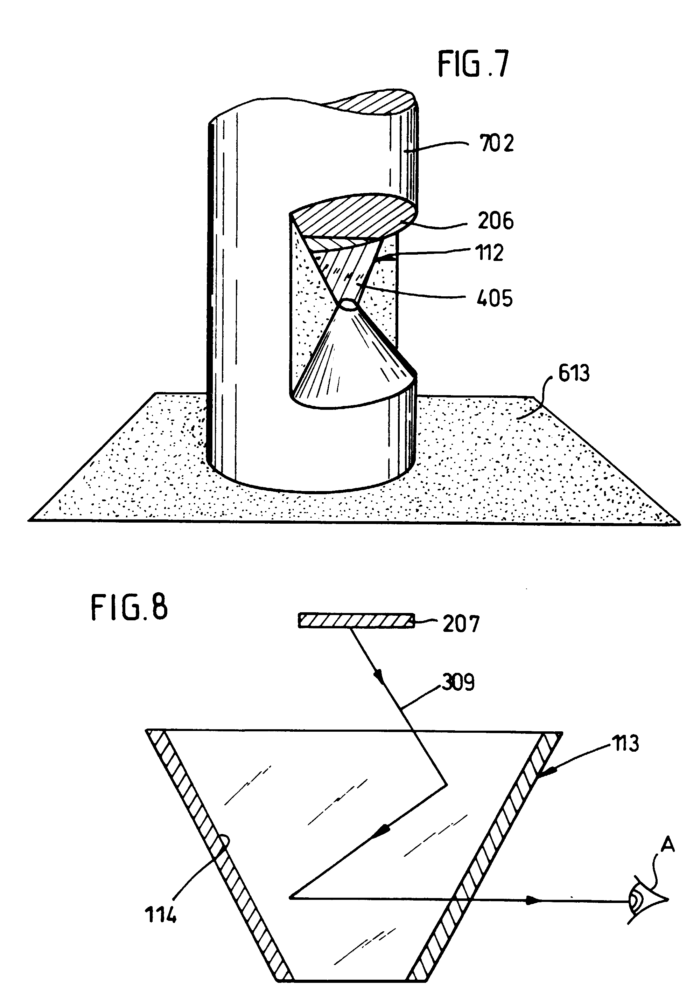

La figure 7 repésente un exemple d'un support commun à l'hologramme et à l'objet sombre.

Une colonne cylindrique 702 disposée sur un plan d'observation 613 présente une fenêtre de visualisation des images holographiques de l'hologramme 112 et du reflet 405 de l'objet sombre 206.

La figure 8 représente en vue de face un hologramme tronconique 113 de type opaque à surface spéculaire métallisée 114.

Un rayon lumineux 309 provenant de l'objet sombre 207 subit deux réflexions sur la surface spéculaire concave de l'hologramme 113 avant d'atteindre l'oeil de l'observateur A.

Bien entendu, l'objet sombre ne doit pas intercepter les rayons lumineux de la source de restitution. Il doit entourer la source de restitution pour éviter que des rayons parasites viennent perturber la restitution correcte de l'image holographique.

L'invention s'applique à tous les types d'hologrammes transparents ou opaques qui permettent d'obtenir ce résultat, comme par exemple ceux décrits par le déposant dans la demande de brevet FR-A-2.633.069 du 20 Juin 1988.

Les hologrammes peuvent donc aussi être restitués par transmission.

On voit que grâce à l'invention, on peut présenter des images holographiques en pleine lumière ou dans une ambiance contenant beaucoup de lumières parasites. C'est le cas dans des lieux publics couverts ou en plein air : stations de métro, avenues, rues, places. Dans la journée, et à l'extérieur, la lumière est celle du soleil et la nuit, il peut s'agir des innombrables sources lumineuses gênantes : phares de voiture, enseignes lumineuses, vitrines, éclairage public, etc.

Dans le cas d'une telle application, on peut considérer le ciel nocturne comme constituant un objet sombre puisque son reflet très foncé, parfois pratiquement noir, sur la surface spéculaire de l'hologramme a pour conséquence de se substituer aux reflets parasites, le reflet des étoiles étant, dans ce cas, négligeable.

Plus généralement, lorsque l'objet sombre peut être situé en hauteur par rapport à l'hologramme (ou aux hologrammes), on peut utiliser le plafond d'un local, soit sombre en lui-même, soit laissé volontairement sans éclairage.

Afin d'obtenir une bonne restitution malgré un éclairement d'ambiance variable, le dispositif est avantageusement muni de moyens qui régulent l'éclairement de l'hologramme en fonction de la luminosité de son environnement. Ces moyens sont à la portée de l'homme de métier et ne seront donc pas décrits en détails.

Pour obtenir l'extinction de la réflexion vitreuse de la lumière de la source de restitution sur la surface spéculaire de l'hologramme, on peut polariser convenablement cette lumière rectilignement en disposant des polariseurs "en éventail", c'est-à-dire répartis selon la courbure de l'hologramme.

L'invention trouve une application très intéressante en association à du mobilier urbain d'intérieur ou d'extérieur : poteaux et lampadaires, supports d'affiches tels que des colonnes, etc., situés dans des aérogares, des stations de métro, des galeries marchandes, halls, ou tout simplement dans des rues, des passages, des avenues, c'est-à-dire partout où peuvent se trouver de nombreuses personnes.

Les supports des hologrammes et des objets sombres peuvent donc avoir une multitude de formes et de fonctions différentes.

Lorsque l'on associe l'invention à un appareil d'éclairage tel qu'un lampadaire, il est possible d'utiliser la source de lumière non seulement pour l'éclairage contribuant à créer l'ambiance lumineuse mais aussi comme source de restitution de l'image holographique.

## Revendications

1. Dispositif pour l'observation, par un ou plusieurs observateurs susceptibles de se déplacer sur un plan d'observation prédéterminé dans une zone d'observation prédéterminée, d'au moins une image holographique exposée dans une ambiance lumineuse, comprenant :
- un hologramme (108) présentant au moins une surface spéculaire concave (403) tournée vers la zone d'observation, dont la normale en chaque point ainsi qu'une génératrice droite de cette surface spéculaire passant par ce point, sont sécantes avec le plan d'observation (605) selon des angles respectifs non droits,
- une source lumineuse (800) éclairant l'hologramme selon un faisceau de restitution pour restituer, après diffraction par l'hologramme, l'image holographique (900) dans la zone d'observation selon au moins un faisceau diffracté d'observation (901) sensiblement parallèle au plan d'observation (605), et,
- au moins un objet sombre (204), situé en dehors des trajets optiques respectifs dudit faisceau de restitution et du ou des faisceaux diffractés d'observation, et agencé de façon à ce que sa surface se reflète sur la surface spéculaire de l'hologramme (403) selon un ou des faisceaux réfléchis (307) sensiblement confondus avec le ou les faisceaux diffractés d'observation (901).

2. Dispositif selon la revendication 1, dans lequel l'hologramme présente une surface spéculaire comportant au moins une partie cylindrique (104).

3. Dispositif selon la revendication 1, dans lequel l'hologramme présente une surface spéculaire comportant au moins une partie tronconique (404).

4. Dispositif selon l'une des revendications précédentes, dans lequel les normales à la surface spéculaire de l'hologramme (108) coupent le plan d'observation (605) du côté de la partie concave de l'hologramme.

5. Dispositif selon l'une des revendications 1 à 3, dans lequel les normales à la surface spéculaire de l'hologramme (110) coupent le prolongement du plan d'observation situé du côté de la partie convexe de l'hologramme.

6. Dispositif selon l'une des revendications précédentes, dans lequel le ou les faisceaux réfléchis atteignant les yeux du ou des observateurs résultent d'une simple et/ou d'une double réflexion de l'objet sombre (207) sur la surface spéculaire de l'hologramme.

7. Dispositif selon l'une des revendications précédentes, comportant en outre des surfaces réfléchissantes auxiliaires par l'intermédiaire desquelles l'objet sombre se reflète sur la surface spéculaire de l'hologramme.

8. Dispositif selon l'une des revendications précédentes, dans lequel au moins un objet sombre (204) se situe au niveau du plan d'observation (605).

9. Dispositif selon l'une des revendications précédentes, dans lequel au moins un objet sombre (205) se situe au-dessus de l'hologramme (110).

10. Dispositif selon l'une des revendications précédentes, dans lequel un même support (701, 702) soutient l'hologramme (110, 112) et l'objet sombre (205, 206).

11. Dispositif selon la revendication 10, dans lequel le support commun à l'hologramme et à l'objet sombre est constitué par une colonne cylindrique (702) qui présente au moins une fenêtre de visualisation des images holographiques.

12. Dispositif selon l'une des revendications précédentes, tel comportant des moyens destinés à réguler l'éclairement de l'hologramme en fonction de la luminosité du site dans lequel il se trouve placé.

13. Dispositif selon l'une des revendications précédentes, dans lequel la source de restitution de l'hologramme est constituée par une source de lumière d'un appareil d'éclairage contribuant à créer l'ambiance lumineuse.

14. Dispositif selon l'une des revendications précédentes, dans lequel au moins un objet sombre (205) entoure la source de restitution (802).

## Patentansprüche

1. Vorrichtung zur Beobachtung mindestens eines in einer leuchtenden Umgebung dargestellten holographischen Bildes durch einen oder mehrere Beobachter, die in der Lage sind, sich auf einer vorgegebenen Beobachtungsebene in einer vorgegebenen Beobachtungszone zu bewegen, welche aufweist:
- ein Hologramm (108), welches mindestens eine konkave, zur Beobachtungszone gewandte Spiegeloberfläche (403) aufweist, deren Normale in jedem Punkt ebenso wie eine gerade, durch diesen Punkt gehende Mantellinie der Spiegeloberfläche die Beobachtungsebene (605) jeweils unter einem nicht rechten Winkel schneidet,
- eine Lichtquelle (800), welche das Hologramm gemäß einem Wiedergabe-Strahlenbündel beleuchtet, um nach Brechung durch das Hologramm das holographische Bild (900) in der Beobachtungszone gemäß mindestens einem gebrochenen Beobachtungs-Strahlenbündel (901) annähernd parallel zur Beobachtungsebene (605) wiederzugeben, und
- mindestens ein dunkles Objekt (204), welches außerhalb der jeweiligen optischen Pfade des genannten Wiedergabe-Strahlenbündels und des oder der gebrochenen Beobachtungs-Strahlenbündel gelegen ist und welches derartig eingerichtet ist, daß seine Oberfläche sich auf der Spiegeloberfläche des Hologramms (40) gemäß einem oder mehreren reflektierten Strahlenbündel(n) (307), annähernd mit dem oder den gebrochenen Beobachtungs-Strahlenbündel(n) (901) verschmolzen, spiegelt.

2. Vorrichtung nach Anspruch 1, von der Art, daß das Hologramm eine Spiegeloberfläche aufweist, die mindestens einen zylindrischen Abschnitt (104) umfaßt.

3. Vorrichtung nach Anspruch 1, von der Art, daß das Hologramm eine Spiegeloberfläche aufweist, welche mindestens einen kegelstumpfartigen Abschnitt (404) umfaßt.

4. Vorrichtung nach einem der vorangehenden Ansprüche, von der Art, daß die Normalen zur Spiegeloberfläche des Hologramms (108) die Beobachtungsebene (105) auf der Seite des konkaven Abschnitts des Hologramms schneiden.

5. Vorrichtung nach einem der Ansprüche 1 bis 3, von der Art, daß die Normalen zur Spiegeloberfläche des Hologramms (110) die auf der Seite des konvexen Abschnitts des Hologramms gelegene Verlängerung der Beobachtungsebene schneiden.

6. Vorrichtung nach einem der vorangehenden Ansprüche, von der Art, daß das oder die reflektierte(n) Strahlenbündel, welches oder welche die Augen des oder der Beobachter erreicht bzw. erreichen, aus einer einfachen und/oder doppelten Reflexion des dunklen Objektes (207) auf der Spiegeloberfläche des Hologramms resultiert bzw. resultieren.

7. Vorrichtung nach einem der vorangehenden Ansprüche, von der Art, daß sie zusätzlich Hilfs-Reflexionsflächen umfaßt, mittels derer das dunkle Objekt sich auf der Spiegeloberfläche des Hologramms spiegelt.

8. Vorrichtung nach einem der vorangehenden Ansprüche, von der Art, daß mindestens ein dunkles Objekt (204) in Höhe der Beobachtungsebene (605) gelegen ist.

9. Vorrichtung nach einem der vorangehenden Ansprüche, von der Art, daß mindestens ein dunkles Objekt (205) oberhalb des Hologramms (110) gelegen ist.

10. Vorrichtung nach einem der vorangehenden Ansprüche, von der Art, daß ein und derselbe Träger (701, 702) das Hologramm (110, 112) und das dunkle Objekt (205, 206) trägt.

11. Vorrichtung nach Anspruch 10, von der Art, daß der gemeinsame Träger für das Hologramm und das dunkle Objekt von einer zylindrischen Säule (702) gebildet ist, die mindestens ein Fenster zur Darstellung des holographischen Bildes aufweist.

12. Vorrichtung nach einem der vorangehenden Ansprüche, von der Art, daß sie Mittel umfaßt, welche dazu bestimmt sind, die Beleuchtungsstärke des Hologramms in Abhängigkeit von der Helligkeit des Standortes, an welchem es sich befindet, zu regeln.

13. Vorrichtung nach einem der vorangehenden Ansprüche, von der Art, daß die Wiedergabequelle für das Hologramm von einer Lichtquelle einer Beleuchtungseinrichtung gebildet ist, welche zur Erzeugung der Umgebungshelligkeit beiträgt.

14. Vorrichtung nach einem der vorangehenden Ansprüche, von der Art, daß mindestens ein dunkles Objekt (205) die Wiedergabequelle (802) umgibt.

## Claims

1. Device for the observation, by one or more observers who may move on a predetermined observation plane in a predetermined observation zone, of at least one holographic image exposed in bright surroundings, comprising:
- a hologram (108) having at least one concave specular surface (403) turned towards the observation zone, the normal to which at each point, as well as a straight generatrix of this specular surface passing through this point, are secant with the observation plane (605) at non-right respective angles,
- a light source (800) illuminating the hologram by a reconstruction beam in order to reconstruct, after diffraction by the hologram, the holographic image (900) in the observation zone by at least one diffracted observation beam (901) substantially parallel to the observation plane (605), and
- at least one dark object (204), located out of the respective optical paths of the said reconstruction beam and of the diffracted observation beam or beams and arranged so that its surface is reflected from the specular surface of the hologram (403) by one or more reflected beams (307) substantially coincident with the diffracted observation beam or beams (901).

2. Device according to Claim 1, in which the hologram has a specular surface including at least one cylindrical part (104).

3. Device according to Claim 1, in which the hologram has a specular surface including at least one frustoconical part (404).

4. Device according to one of the preceding claims, in which the normals to the specular surface of the hologram (108) cut the observation plane (605) on the side of the concave part of the hologram.

5. Device according to one of Claims 1 to 3, in which the normals to the specular surface of the hologram (110) cut the extension of the observation plane located on the side of the convex part of the hologram.

6. Device according to one of the preceding claims, in which the reflected beam or beams reaching the eyes of the observer or observers result from a single and/or double reflection of the dark object (207) from the specular surface of the hologram.

7. Device according to one of the preceding claims, furthermore including auxiliary reflecting surfaces, by means of which the dark object is reflected from the specular surface of the hologram.

8. Device according to one of the preceding claims, in which at least one dark object (204) is located at the level of the observation plane (605).

9. Device according to one of the preceding claims, in which at least one dark object (205) is located above the hologram (110).

10. Device according to one of the preceding claims, in which the same support (701, 702) supports the hologram (110, 112) and the dark object (205, 206).

11. Device according to Claim 10, in which the support common to the hologram and to the dark object consists of a cylindrical column (702) which has at least one window for viewing holographic images.

12. Device according to one of the preceding claims, including means intended to control the illumination of the hologram as a function of the luminosity of the site in which it is placed.

13. Device according to one of the preceding claims, in which the hologram reconstruction source consists of a light source of a lighting apparatus contributing to the creation of the bright surroundings.

14. Device according to one of the preceding claims, in which at least one dark object (205) surrounds the reconstruction source (802).
